# EUROPEAN PATENT APPLICATION

(11) **EP 3 054 021 A1**
(43) Date of publication of application: **10.08.2016**
(21) Application number: 14848102.1
(22) Date of filing: 08.09.2014
(51) Int. Cl.: C21D 9/40, C21D 1/10, C21D 1/42, F16C 33/62, F16C 33/64, H05B 6/10, H05B 6/44

(54) **HEAT TREATMENT METHOD FOR RING-SHAPED MEMBER AND HEAT TREATMENT EQUIPMENT FOR RING-SHAPED MEMBER**

(30) Priority: 30.09.2013 JP 2013204256
(71) Applicant: NTN Corporation, Osaka-shi, Osaka 550-0003 (JP)
(72) Inventor: HIRAOKA Tsuneaki, Iwata-shi Shizuoka 438-8510 (JP); HIRAYAMA Eri, Iwata-shi Shizuoka 438-8510 (JP); SUZUKI Shintaro, Iwata-shi Shizuoka 438-8510 (JP)
(74) Representative: Grünecker Patent- und Rechtsanwälte PartG mbB
(86) International application number: PCT/JP2014/073614
(87) International publication number: WO 2015/045821

(57) **Abstract**

In a heating step (S1) of inductively heating a steel outer ring (OR) to a target temperature, a plurality of outer rings (OR) retained coaxially by a retaining unit (3) are caused to sequentially pass through an opposing region of a pre-heating coil (22) having a variable output, and through an opposing region of a heating coil (21) having a constant output and being arranged coaxially with the pre-heating coil (22) on an exit side of the pre-heating coil (22). Thus, the plurality of outer rings (OR) are sequentially and inductively heated to the target temperature.

## Description

### Technical Field

The present invention relates to a heat treatment method for a ring-shaped member and a heat treatment apparatus for a ring-shaped member.

### Background Art

As is well known, in a process of manufacturing a steel ring-shaped member (such as a raceway ring of a rolling bearing), heat treatment (quench hardening) is carried out on the ring-shaped member so as to impart required mechanical strength and the like to the ring-shaped member. The quench hardening involves a heating step of heating the ring-shaped member to a target temperature (for example, to a temperature range equal to or higher than an A₁ transformation point), and a cooling step of cooling the ring-shaped member heated to the target temperature. The heating step can be carried out using, for example, an atmosphere heating furnace such as a mesh belt continuous furnace.

The atmosphere heating furnace has an advantage of being capable of heating a large number of workpieces at the same time. However, the atmosphere heating furnace needs to heat not only a workpiece but also the atmosphere. Hence, the atmosphere heating furnace has a problem of low energy efficiency. In this context, in the heating step, a workpiece may be heated to the target temperature by induction heating (high-frequency induction heating) (for example, see Patent Literature 1). By the induction heating, a workpiece can be directly heated, thereby being capable of achieving high energy efficiency. Further, when a workpiece to be heated is a ring-shaped member such as a raceway ring, as described in Patent Literature 1, there may be adopted a method of energizing a heating coil under a state in which a plurality of ring-shaped members are aligned in an axial direction and retained in an opposing region of the heating coil. In this method, the plurality of ring-shaped members can be inductively heated at the same time, thereby being capable of increasing efficiency of heat treatment.

### Citation List

Patent Literature 1: JP 2006-200019 A

### Summary of Invention

### Technical Problem

Incidentally, a continuous heating method involving continuously heating each longitudinal portion of an elongated workpiece (such as a billet) by moving the workpiece in an axial direction relatively to an energized heating coil has an advantage of being capable of efficiently soaking the elongated workpiece. Accordingly, the inventors of the present invention attempted to inductively heat ring-shaped members by the above-mentioned continuous heating method. That is, the inventors of the present invention attempted to sequentially and inductively heat a plurality of ring-shaped members to a target temperature by relatively moving, in the axial direction, the plurality of ring-shaped members retained coaxially with each other, and a heating coil that was elongated more than each of the ring-shaped members and energized so as to have a constant output.

However, in this way, of the plurality of ring-shaped members, particularly one or a plurality of ring-shaped members arranged at an end (and the vicinity of the end) on a start side and a finish side of heat treatment were overheated. It is difficult for the overheated ring-shaped members to keep desired mechanical strength and the like. Thus, the overheated ring-shaped members need to be disposed of. Therefore, there arises a problem of reduction in yield of products. Note that, the above-mentioned problem of overheating may arise for the following reason. Normally, in the continuous heating method, an output of the heating coil is set to a constant value capable of heating the respective ring-shaped members to a target temperature under a state in which the ring-shaped members are present in an entire opposing region of the heating coil (under a state in which an inner periphery of the heating coil is filled with the ring-shaped members). Accordingly, at a stage immediately after start of the heating step and a stage immediately before finish of the heating step, at which the ring-shaped members are only present in a part of the opposing region of the heating coil, amounts of induced currents generated in the respective ring-shaped members are increased, thereby overheating the ring-shaped members.

The above-mentioned problem of overheating can be avoided as much as possible by reducing the output of the heating coil. However, in this case, it is difficult to inductively heat, to the target temperature, all of the plurality of ring-shapedmembers aligned in the axial direction.

In view of the above-mentioned circumstances, it is an object of the present invention to provide a method and apparatus capable of efficiently quench-hardening a steel ring-shaped member and of properly carrying out the quench hardening while minimizing defective products.

### Solution to Problem

According to one embodiment of the present invention, which is devised to achieve the above-mentioned object, there is provided a heat treatment method for a ring-shapedmember, comprising a heating step of inductively heating a steel ring-shaped member to a target temperature, the heating step comprising causing a plurality of the steel ring-shaped members, which are retained coaxially by a retaining unit, to sequentially pass through an opposing region of a pre-heating coil having a variable output, and through an opposing region of a heating coil having a constant output and being arranged coaxially with the pre-heating coil on an exit side of the pre-heating coil, to thereby sequentially and inductively heat the plurality of the steel ring-shaped members to the target temperature.

In this manner, when the plurality of ring-shapedmembers retained coaxially with each other are caused to pass through the opposing region of the pre-heating coil having the variable output, the ring-shaped members can be pre-heated to an appropriate temperature. Accordingly, the ring-shaped members can be prevented from being heated insufficiently as much as possible. Further, when the above-mentionedmethod is adopted, as compared to the related-art method of inductively heating the ring-shaped members to the target temperature using a single heating coil, the output of the heating coil can be reduced. Consequently, it is possible to reduce amounts of induced currents generated in the ring-shaped members when the ring-shaped members pass through the opposing region of the heating coil. Accordingly, of the plurality of ring-shaped members aligned in an axial direction, particularly one or a plurality of ring-shaped members arranged on a start side and a finish side of the heating step can be prevented from being overheated as much as possible. Further, when the output of the heating coil can be reduced, a deterioration rate of the heating coil can be reduced. Thus, there is also an advantage of being capable of reducing a maintenance cost.

On the other hand, the heating step is carried out by a so-called continuous heating method involving moving the plurality of ring-shaped members, which are retained to be aligned in the axial direction, relatively to the heating coil (pre-heating coil and heating coil) in the axial direction. Accordingly, operations and effects attained by adopting the continuous heating method, specifically, for example, operations and effects capable of soaking the respective ring-shaped members, and of efficiently carrying out heat treatment can be effectively attained. Therefore, according to the one embodiment of the present invention, quench hardening of the steel ring-shapedmembers can be efficiently carried out, and can be properly carried out while minimizing defective products.

As a specific measure for effectively attaining the operations and effects described above, it is conceivable that the heating step comprises: an output increasing step of increasing the output of the pre-heating coil in a stepped manner; and an output decreasing step of decreasing the output of the pre-heating coil in a stepped manner.

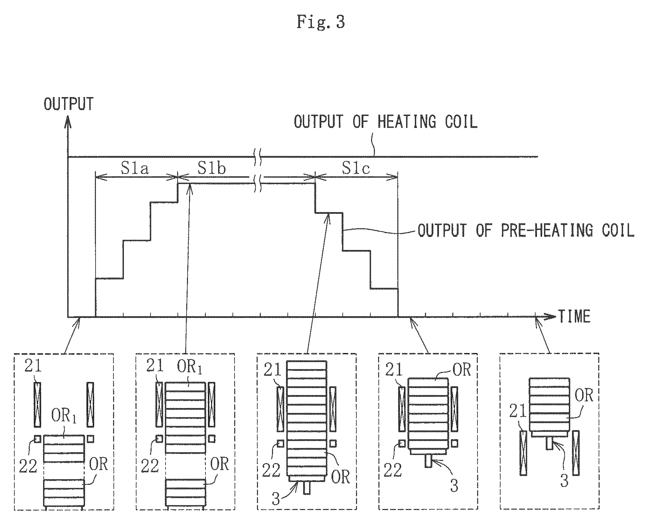

In this case, it is preferred that an output increase pattern of the pre-heating coil in the output increasing step and an output decrease pattern of the pre-heating coil in the output decreasing step be different from each other. This is because an electric conductivity and magnetism of a workpiece to be heated change along with temperature rise, with the result that the ring-shaped members arranged on the heating start side and the ring-shaped members arranged on the heating finish side differ from each other in temperature rise pattern. Note that, the description "the output increase pattern of the pre-heating coil in the output increasing step and the output decrease pattern of the pre-heating coil in the output decreasing step are different from each other" means that the two output patterns of the pre-heating coil in the both steps do not conform to each other when any one of the output patterns is reversed horizontally and then superposed on another one of the output patterns (for example, see FIG. 3).

In the above-mentioned configuration, the output of the pre-heating coil may be varied in accordance with a relative position of the retaining unit with respect to the heating coil. In particular, of the output increasing step and the output decreasing step, at least in the output increasing step, the output of the pre-heating coil may be varied in accordance with a number of the steel ring-shaped members present in the opposing region of the heating coil.

In the above-mentioned configuration, when the pre-heating coil and the heating coil are connected to separate high-frequency power sources, respectively, the output of each of the coils can be easily set to an appropriate value, thereby increasing versatility.

The heat treatment method according to the one embodiment of the present invention may further comprise a cooling step of cooling the steel ring-shaped member inductively heated to the target temperature. With this, the ring-shaped members can be properly quench-hardened.

As the ring-shaped member to be subjected to the heat treatment method according to the one embodiment of the present invention, there may be given, for example, a raceway ring (outer ring or inner ring) of a rolling bearing made of a steel material having a carbon content of 0.8 mass% or more.

Note that, normally, heat treatment is carried out on a steel material containing carbon of 0.8 mass% or more in such a manner that carbon of approximately 0.6 mass% is melted into austenite and then the residue is left as a carbide. This is because hardness change of martensite is small even when carbon of 0. 6 mass% or more is melted into austenite, and because melt of excessive amount of carbon may cause residual austenite, that is, cause reduction in hardness and deterioration over time. Further, the remaining carbide contributes to suppression of growth of austenite grains during heating, and to enhancement of abrasion resistance of a workpiece. Further, a melting amount of carbon in the steel material depends on a heating temperature and a heating time period. In the heating method adopted in the one embodiment of the present invention, the heating temperature can be adjusted by the outputs of the coils (pre-heating coil and heating coil), and the heating time period can be adjusted by relative moving speed of the ring-shaped member with respect to the coils. Therefore, the heat treatment method according to the one embodiment of the present invention is suited as a heat treatment method for a raceway ring of a rolling bearing made of a steel material containing carbon of 0.8 mass% or more.

Further, the above-mentioned object may be achieved by a heat treatment apparatus for a ring-shaped member, comprising: a heating unit configured to inductively heat a steel ring-shaped member to a target temperature; a retaining unit configured to retain a plurality of the steel ring-shaped members thereon under a state in which the plurality of the steel ring-shaped members are aligned in an axial direction of each of the plurality of the steel ring-shaped members; and a driver configured to move the retaining unit in the axial direction relatively to the heating unit, the heating unit comprising: a pre-heating coil having a variable output; and a heating coil having a constant output and being arranged coaxially with the pre-heating coil on an exit side of the pre-heating coil, the driver being configured to move the retaining unit in the axial direction relatively to the heating unit so as to cause the plurality of the steel ring-shaped members, which are retained by the retaining unit to be aligned in the axial direction, to sequentially pass through an opposing region of the pre-heating coil and an opposing region of the heating coil.

### Advantageous Effects of Invention

As described above, according to the embodiments of the present invention, it is possible to efficiently quench-harden the steel ring-shaped member and to properly carry out the quench hardening while minimizing defective products. Thus, it is possible to reduce a manufacturing cost of the steel ring-shaped member typified by a raceway ring of a rolling bearing.

### Brief Description of Drawings

FIG. 1 is a schematic view for illustrating an initial state of a heat treatment apparatus to be used when carrying out a heat treatment method according to the present invention.
FIG. 2 is a flowchart for illustrating steps of quench hardening.
FIG. 3 is a graph for showing settings of outputs of a heating coil and a pre-heating coil to be used in a heating step.
FIG. 4 is a schematic view for illustrating an in-use state of the heat treatment apparatus illustrated in FIG. 1.
FIG. 5 is a table for showing results of comparative verification between the related-art method and the method according to the present invention.

### Description of Embodiments

Now, an embodiment of the present invention is described with reference to the drawings.

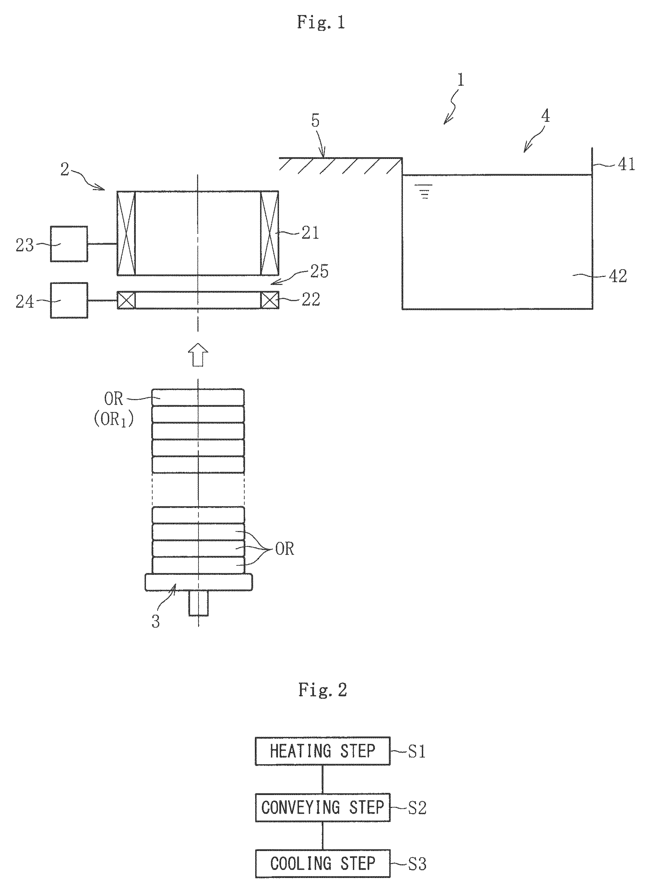

FIG. 1 is a schematic view for illustrating an initial state of a heat treatment apparatus to be used when carrying out a heat treatment method for a ring-shaped member according to the present invention. A heat treatment apparatus 1 illustrated in FIG. 1 is a heat treatment apparatus configured to quench-harden an outer ring OR of a rolling bearing as a ring-shaped member, and sequentially carries out a heating step S1, a conveying step S2, and a cooling step S3 illustrated in FIG. 2 on the outer ring OR. The heat treatment apparatus 1 comprises a heating unit 2 and a retaining unit 3 to be used in the heating step S1, a conveyor 5 to be used in the conveying step S2, and a cooling unit 4 to be used in the cooling step S3. The heating unit 2 and the retaining unit 3 are arranged coaxially with each other.

The retaining unit 3 can retain a plurality of outer rings OR coaxially thereon. The retaining unit 3 according to this embodiment retains the plurality of outer rings OR in a vertically stacked state so that center axes of the outer rings OR are aligned. In the initial state of the heat treatment apparatus 1 illustrated in FIG. 1, the retaining unit 3 (and the plurality of outer rings OR retained coaxially by the retaining unit 3) is arranged vertically below a pre-heating coil 22 constructing the heating unit 2 at a predetermined distance from the pre-heating coil 22. The retaining unit 3 is movable in an axial direction relatively to the heating unit 2. In this embodiment, the retaining unit 3 is connected to a driver (not shown) such as a hydraulic cylinder, and the retaining unit 3 is pitch-fed or continuously fed in accordance with an output of the driver.

The heating unit 2 comprises a heating coil 21 and the pre-heating coil 22 aligned vertically and arranged coaxially with each other. Both of the coils 21 and 22 can surround the outer ring OR to be heat-treated from a radially outer side of the outer ring OR. The pre-heating coil 22 is arranged on a relatively lower side, whereas the heating coil 21 is arranged on a relatively upper side (exit side of the pre-heating coil 22). As the heating coil 21, there is used a coil having a dimension larger than an axial dimension of the outer ring OR to be heated. Specifically, when L represents the axial dimension of the outer ring OR to be heated, a coil having an axial dimension satisfying L×n (where n is equal to or larger than two) is used. In this embodiment, a coil having an axial dimension satisfying L×5 is used. On the other hand, as the pre-heating coil 22, there is used a coil having an axial dimension substantially equal to the axial dimension L of the outer ring OR. Both of the coils 21 and 22 are electrically connected to high-frequency power sources 23 and 24, respectively. As described above, when the heating coil 21 and the pre-heating coil 22 are electrically connected to the separate high-frequency power sources, respectively, an output of each of the coils 21 and 22 can be easily set to an arbitrary value, thereby increasing versatility.

As shown in FIG. 3, the output of the heating coil 21 is constant while the heating step S1 is carried out. In this case, the output of the heating coil 21 is set so that the outer ring OR to be heated to the highest temperature is heated to a target temperature. Note that, normally, the outer ring OR to be heated to the highest temperature is arranged at an end on a heating start side (upper side), at an end on a heating finish side (lower side), or at the vicinity of the end on the heating start side or the heating finish side.

On the other hand, the output of the pre-heating coil 22 varies in accordance with a degree of progress of the heating step S1. Specifically, the output of the pre-heating coil 22 varies in accordance with an axial relative position of the retaining unit 3 with respect to the heating unit 2 (heating coil 21) . In the heating step S1, there are sequentially carried out an output increasing step S1a of increasing the output of the pre-heating coil 22 in a stepped manner, an intermediate step S1b of keeping the output of the pre-heating coil 22 to a constant value, and an output decreasing step S1c of decreasing the output of the pre-heating coil 22 in a steppedmanner. The output increasing step S1a is started when a foremost outer ring OR₁ of the plurality of outer rings OR retained coaxially by the retaining unit 3 is arranged in an opposing region of the heating coil 21. Further, as schematically shown in FIG. 3, the intermediate step S1b is carried out continuously for a predetermined time period after the heating unit 2 and the retaining unit 3 are brought into such a positional relationship that the entire opposing region of the heating coil 21 is filled with the outer rings OR. Further, assuming that the output of the pre-heating coil 22 during the intermediate step S1b is 100%, in the output increasing step S1a, in accordance with the axial relative position of the retaining unit 3 with respect to the heating unit 2, the output of the pre-heating coil 22 is increased in a stepped manner in the order of 30%, 60%, and 90%. In the output decreasing step Sic, in accordance with the axial relative position of the retaining unit 3 with respect to the heating unit 2, the output of the pre-heating coil 22 is decreased in a stepped manner in the order of 70%, 50%, and 30%.

Note that, the above-mentioned variation mode of the output of the pre-heating coil 22 is merely an example. The variation mode may be modified as appropriate depending on a shape, a size, and the like of the ring-shaped member to be heated. For example, of the output increasing step S1a and the output decreasing step Sic, at least in the output increasing step S1a, the output of the pre-heating coil 22 may be varied in a stepped manner in accordance with the number of the outer rings OR present (arranged) in the opposing region of the heating coil 21. In short, in the case of this embodiment using the heating coil 21 having the axial dimension satisfying L×5, in the output increasing step S1a, the output of the pre-heating coil 22 may be varied in four steps.

A mutual induction preventing part 25 is interposed between the heating coil 21 and the pre-heating coil 22 so as to prevent occurrence of mutual induction when energizing both of the coils 21 and 22. In this embodiment, an air gap is adopted as the mutual induction preventing part 25. That is, the heating coil 21 and the pre-heating coil 22 are arranged at a predetermined distance from each other so as not to cause mutual induction. Note that, a shield member may be adopted as the mutual induction preventing part 25.

The cooling unit 4 comprises a cooling liquid bath 41 configured to store therein a cooling liquid (such as a quenching oil) 42 kept at an appropriate temperature. The conveyor 5 has a role of conveying, into the cooling liquid bath 41, the outer ring OR inductively heated to the target temperature in the heating step s1.

Now, description is made of procedures of quench-hardening the outer ring OR, which are carried out using the above-mentioned heat treatment apparatus 1.

Prior to carrying out the quench hardening, a step of manufacturing the ring-shaped member is carried out, thereby manufacturing the outer ring OR as the ring-shaped member. Specifically, a steel material having a carbon content of 0.8 mass% or more (such as SUJ2 being a kind of bearing steel specified in JISG4805) is prepared, and the steel material is subjected to plastic working such as forging, and to machining such as turning and grinding. Thus, the outer ring OR having a predetermined ring shape in general is manufactured. As the steel having the carbon content of 0. 8 mass% or more, in addition to SUJ2, other kinds of bearing steel typified by SUJ3, and tool steel (such as SKD11, SKD12, SKD3, and SKD31) specified in JIS G4404 can be exemplified.

Next, the quench hardening is carried out using the above-mentioned heat treatment apparatus 1. As illustrated in FIG. 2, the quench hardening comprises the heating step S1 of inductively heating, to the target temperature, the outer ring OR manufactured in the step of manufacturing the ring-shaped member, the conveying step S2 of conveying, into the cooling unit 4 (cooling liquid bath 41), the outer ring OR heated to the target temperature, and the cooling step S3 of cooling and quench-hardening the outer ring OR.

### (A) Heating Step S1

In the heating step S1, the plurality of outer rings OR retained coaxially by the retaining unit 3 are sequentially heated to the target temperature (to a temperature range exceeding an A₁ transformation point in this case). In the heating step S1, first, the plurality of outer rings OR are stacked vertically on the retaining unit 3 so that the center axes of the outer rings OR are aligned. Each outer ring OR has the axial dimension smaller than a radial dimension thereof. Accordingly, when the outer rings OR are stacked vertically as in this embodiment, there is an advantage in that postures of the outer rings OR are stabilized while carrying out the heating step S1. Although detailed illustration is omitted, work of vertically stacking the plurality of outer rings OR can be carried out automatically.

When the driver (not shown) is operated to apply a force of feeding the retaining unit 3 vertically upward, the plurality of outer rings OR retained coaxially by the retaining unit 3 sequentially enter an opposing region of the pre-heating coil 22 and the opposing region of the heating coil 21. As schematically shown in FIG. 3, after start of the heating step S1, electric power supplied from the high-frequency power source 23 causes a high-frequency current to flow through the heating coil 21. The supply of electric power from the high-frequency power source 23 to the heating coil 21 is continued until all of the outer rings OR are discharged to an upper side of the heating coil 21 after passing through the opposing region of the heating coil 21. Note that, the supply of electric power from the high-frequency power source 23 to the heating coil 21 may be started the moment that the foremost outer ring OR₁ of the plurality of outer rings OR retained coaxially by the retaining unit 3 enters the opposing region of the heating coil 21, or may be started immediately before the foremost outer ring OR₁ enters the opposing region of the heating coil 21. Further, in order to obtain the output pattern schematically shown in FIG. 3, electric power is supplied from the high-frequency power source 24 to the pre-heating coil 22. Then, each outer ring OR is inductively heated to the target temperature (to the temperature range exceeding the A₁ transformation point) while passing through the opposing region of the pre-heating coil 21 and the opposing region of the heating coil 22.

### (B) Conveying Step S2

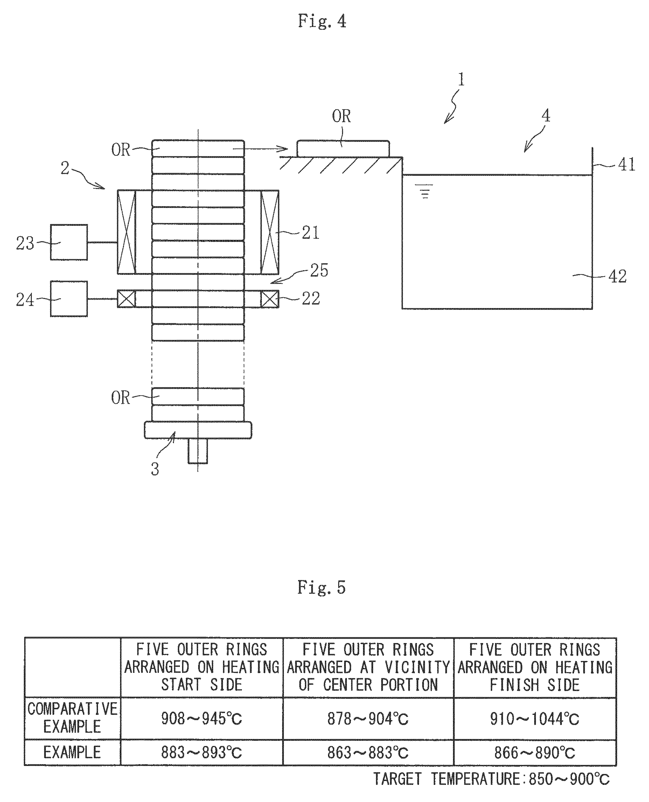

In the conveying step S2, as illustrated in FIG. 4, the outer rings OR heated to the target temperature are sequentially conveyed by the conveyor 5 into the cooling unit 4 (cooling liquid bath 41).

### (C) Cooling Step S3

In the cooling step S3, the outer ring OR conveyed by the conveyor 5 into the cooling liquid bath 41 is immersed in the cooling liquid 42 stored in the cooling liquid bath 41. Thus, the outer ring OR is cooled from the temperature range equal to or higher than the A₁ transformation point to a temperature range equal to or lower than an Ms point, thereby being quench-hardened.

Through the above-mentioned procedures, the quench hardening of the outer ring OR using the heat treatment apparatus 1 is completed. Then, the outer ring OR after completion of the quench hardening is subjected to predetermined processes such as tempering and finishing (for example, polishing of a raceway surface), thereby being formed into a finished product.

As described above, according to the present invention, in the heating step S1, the plurality of outer rings OR retained coaxially by the retaining unit 3 are caused to pass through the opposing region of the pre-heating coil 22 having a variable output, and through the opposing region of the heating coil 21 having a constant output and being arranged coaxially with the pre-heating coil 22 on the exit side of the pre-heating coil 22. Thus, the plurality of outer rings OR are sequentially heated to the target temperature. In this manner, when the plurality of outer rings OR are caused to pass through the opposing region of the pre-heating coil 22 having the variable output, the outer rings OR can be pre-heated to the appropriate temperature. Accordingly, the outer rings OR can be prevented from being heated insufficiently as much as possible. Further, when the above-mentioned method is adopted, as compared to a method of inductively heating the ring-shaped member using a single heating coil from normal temperature to the target temperature, the output of the heating coil 21 can be reduced. Consequently, it is possible to reduce amounts of induced currents generated in the outer rings OR when the outer rings OR pass through the opposing region of the heating coil 21. Accordingly, of the plurality of outer rings OR retained to be aligned in the axial direction, particularly one or a plurality of outer rings OR arranged on the heating start side and on the heating finish side can be prevented from being overheated as much as possible. Further, when the output of the heating coil 21 can be reduced, a deterioration rate of the heating coil 21 can be reduced. Thus, there is also an advantage of being capable of reducing a maintenance cost.

Particularly in this embodiment, until the entire opposing region of the heating coil 21 is filled with the outer rings OR after start of the heating step S1, the output of the pre-heating coil 22 is increased in a stepped manner, and then the output of the pre-heating coil 22 is decreased in a stepped manner. In this way, of the plurality of outer rings OR retained to be aligned in the axial direction, particularly the one or the plurality of outer rings OR arranged on the heating start side and on the heating finish side can be effectively prevented from being overheated. In addition, an output increase pattern and an output decrease pattern of the pre-heating coil 22 are different from each other. With this, all of the outer rings OR retained to be aligned in the axial direction can be heated to the target temperature. Note that, the reason why the output increase pattern and the output decrease pattern of the pre-heating coil 22 are different from each other is that an electric conductivity and magnetism of a workpiece to be inductively heated change along with temperature rise, with the result that the outer rings OR arranged on the heating start side and the outer rings OR arranged on the heating finish side differ from each other in temperature rise pattern.

On the other hand, the heating step S1 is carried out by a so-called continuous heating method involving moving the plurality of outer rings OR, which are retained to be aligned in the axial direction, relatively to the heating unit 2 (pre-heating coil 22 and heating coil 21) in the axial direction. Accordingly, operations and effects attained by adopting the continuous heating method, specifically, for example, operations and effects capable of soaking the respective outer rings OR, and of efficiently carrying out the heating step S1 can be effectively attained. Therefore, according to the present invention, the quench hardening of the steel outer rings OR can be efficiently carried out, and can be properly carried out while minimizing defective products.

In this case, normally, heat treatment is carried out on a steel material such as SUJ2 containing carbon of 0.8 mass% or more in such a manner that carbon of approximately 0.6 mass% is melted into austenite and then the residue is left as a carbide. This is because hardness change of martensite is small even when carbon of 0.6 mass% or more is melted into austenite, and because melt of excessive amount of carbon may cause residual austenite, that is, cause reduction in hardness and deterioration over time. Further, the remaining carbide contributes to suppression of growth of austenite grains during heating, and to enhancement of abrasion resistance of a workpiece. Further, a melting amount of carbon in the steel material depends on a heating temperature and a heating time period for a workpiece. In the heating method adopted in the present invention, the heating temperature can be adjusted by the output of the pre-heating coil 22 and the output of the heating coil 21, and the heating time period can be adjusted by relative moving speed of the outer rings OR (retaining unit 3) with respect to the coils 21 and 22. Therefore, the heat treatment method according to the present invention is suited particularly as a heat treatment method for the outer ring OR made of SUJ2.

The embodiment of the present invention is described above, but the embodiment of the present invention is not limited to that described above.

For example, although not shown, on the exit side of the heating coil 22, a post-heating coil may be arranged coaxially with the pre-heating coil 22 and the heating coil 21, and a radiation thermometer may be arranged so as to measure (monitor) a temperature of the outer ring OR inductively heated by the heating coil 21. With this configuration, the insufficiently-heated outer ring OR determined by the radiation thermometer may be further inductively heated by the post-heating coil. Thus, the configuration of the apparatus is slightly complicated, but production of insufficiently-heated products can be reliably prevented.

Further, in the above-mentioned embodiment, the plurality of outer rings OR are sequentially and inductively heated to the target temperature, and the outer rings OR inductively heated to the target temperature are sequentially sent to the conveying step S2 and to the cooling step S3. However, the conveying step S2 and the cooling step S3 may be collectively carried out on the plurality of outer rings OR inductively heated to the target temperature.

Further, in the above-mentioned embodiment, the direction of relatively moving the heating unit 2 (heating coil 21 and pre-heating coil 22) and the retaining unit 3 is set to the vertical direction, but the present invention is also applicable to a case where the heating unit 2 and the retaining unit 3 are relatively moved in a horizontal direction.

Further, in the above description, the method according to the present invention is applied to the case of inductively heating the outer ring OR of the rolling bearing to the target temperature. However, the heat treatment method according to the present invention is also suitably applicable to a case of inductively heating, to the target temperature, ring-shaped members made of other kinds of steel (such as an inner ring of a rolling bearing, a sliding bearing, an outer joint member and an inner joint member constructing a constant velocity universal joint, and a cage incorporated into a rolling bearing or a constant velocity universal joint). Example

In order to demonstrate usefulness of the present invention, comparative verification was conducted on whether or not there was a difference in modes of heating a plurality of ring-shaped members between a case of inductively heating the plurality of ring-shaped members using the related-art method, and a case of inductively heating the plurality of ring-shaped members using the method according to the present invention. Here, the related-art method was carried out in such a manner that the plurality of ring-shaped members retained coaxially with each other, and a single heating coil elongated more than the ring-shaped members and supplied with a constant amount of electric power were relatively moved in an axial direction, thereby sequentially and inductively heating the plurality of ring-shaped members to a target temperature. The method according to the present invention was carried out using the heat treatment apparatus 1 illustrated in FIG. 1 and the like. Note that, in the comparative tests, in order to heat twenty outer rings made of SUJ2 and retained coaxially with each other to a temperature range of from 850°C to 900°C, outputs of coils (single heating coil in the related-art method, and heating coil and pre-heating coil in the method according to the present invention) were set as appropriate. Then, of the twenty outer rings retained coaxially with each other, temperatures of five outer rings arranged on the heating start side, temperatures of five outer rings arranged at the vicinity of a center portion, and temperatures of five outer rings arranged on the heating finish side were measured after completion of induction heating. The results of measurement are shown in FIG. 5.

As is apparent from FIG. 5, in the related-art method (Comparative Example), only the outer rings arranged at the vicinity of the center portion were heated to the target temperature, whereas the outer rings arranged on the heating start side and the outer rings arranged on the heating finish side were heated to temperatures exceeding the target temperature. In contrast, in the method according to the present invention (Example), all of the outer rings arranged on the heating start side, at the vicinity of the center portion, and on the heating finish side were heated to the target temperature. Therefore, usefulness of the present invention was demonstrated.

### Reference Signs List

1 heat treatment apparatus
2 heating unit
3 retaining unit
4 cooling unit
21 heating coil
22 pre-heating coil
23 high-frequency power source
24 high-frequency power source
OR outer ring (steel ring-shaped member)
S1 heating step
S1a output increasing step
S1b intermediate step
S1c output decreasing step
S3 cooling step

## Claims

1. A heat treatment method for a ring-shaped member, comprising a heating step of inductively heating a steel ring-shaped member to a target temperature,
the heating step comprising causing a plurality of the steel ring-shaped members, which are retained coaxially by a retaining unit, to sequentially pass through an opposing region of a pre-heating coil having a variable output, and through an opposing region of a heating coil having a constant output and being arranged coaxially with the pre-heating coil on an exit side of the pre-heating coil, to thereby sequentially and inductively heat the plurality of the steel ring-shaped members to the target temperature.

2. The heat treatment method for a ring-shaped member according to claim 1,
wherein the heating step comprises:
an output increasing step of increasing the output of the pre-heating coil in a stepped manner; and
an output decreasing step of decreasing the output of the pre-heating coil in a stepped manner, and
wherein an output increase pattern of the pre-heating coil in the output increasing step and an output decrease pattern of the pre-heating coil in the output decreasing step are different from each other.

3. The heat treatment method for a ring-shaped member according to claim 1 or 2, wherein the output of the pre-heating coil is varied in accordance with a relative position of the retaining unit with respect to the heating coil.

4. The heat treatment method for a ring-shaped member according to claim 2, wherein, of the output increasing step and the output decreasing step, at least in the output increasing step, the output of the pre-heating coil is varied in accordance with a number of the steel ring-shaped members present in the opposing region of the heating coil.

5. The heat treatment method for a ring-shaped member according to any one of claims 1 to 4 , wherein the heating coil and the pre-heating coil are electrically connected to separate high-frequency power sources, respectively.

6. The heat treatment method for a ring-shapedmember according to any one of claims 1 to 5, further comprising a cooling step of cooling the steel ring-shaped member inductively heated to the target temperature.

7. The heat treatment method for a ring-shapedmember according to any one of claims 1 to 6, wherein the steel ring-shaped member comprises a raceway ring of a rolling bearing made of a steel material having a carbon content of 0.8 mass% or more.

8. A heat treatment apparatus for a ring-shaped member, comprising:
a heating unit configured to inductively heat a steel ring-shaped member to a target temperature;
a retaining unit configured to retain a plurality of the steel ring-shaped members thereon under a state in which the plurality of the steel ring-shaped members are aligned in an axial direction of each of the plurality of the steel ring-shaped members; and
a driver configured to move the retaining unit in the axial direction relatively to the heating unit,
the heating unit comprising:
a pre-heating coil having a variable output; and
a heating coil having a constant output and being arranged coaxially with the pre-heating coil on an exit side of the pre-heating coil,
the driver being configured to move the retaining unit in the axial direction relatively to the heating unit so as to cause the plurality of the steel ring-shaped members, which are retained by the retaining unit to be aligned in the axial direction, to sequentially pass through an opposing region of the pre-heating coil and an opposing region of the heating coil.
